**Europäisches Patentamt**

**European Patent Office**

**Office européen des brevets**

(19)

(11) Publication number : **0 366 758 B1**

# (12) EUROPEAN PATENT SPECIFICATION

(45) Date of publication of patent specification :
**02.12.92 Bulletin 92/49**

(51) Int. Cl.⁵ : **B41J 19/00, F16H 19/06**

(21) Application number : **89905358.1**

(22) Date of filing : **14.03.89**

(86) International application number :
**PCT/US89/01046**

(87) International publication number :
**WO 89/09135 05.10.89 Gazette 89/24**

(54) **TOOTHED BELT CARRIAGE DRIVE FOR A PRINTING APPARATUS.**

(30) Priority : **01.04.88 US 176576**

(43) Date of publication of application :
**09.05.90 Bulletin 90/19**

(45) Publication of the grant of the patent :
**02.12.92 Bulletin 92/49**

(84) Designated Contracting States :
**DE FR GB**

(56) References cited :
**DE-A- 2 029 163**
**US-A- 1 405 233**
**US-A- 4 300 847**
**US-A- 4 693 618**

(56) References cited :
**IBM Technical Disclosure Bulletin, vo. 28, no. 9, February 1986, (Armonk, US), "Improved method of belt attachment in a beltescapement system", pages 4021-4022**
**Patent Abstracts of Japan, vol. 8, no. 207 (M-327(1644), 21 September 1984; JP A 59 095 178**

(73) Proprietor : **NCR INTERNATIONAL INC.**
**1700 South Patterson Boulevard**
**Dayton, Ohio 45479 (US)**

(72) Inventor : **WALKER, Alan, Howard**
**315A Oak Hill Road**
**Barton, NY 13734 (US)**
Inventor : **BRULL, Robert, Arnold**
**21 Greystone Drive**
**Dryden, NY 13053 (US)**

(74) Representative : **Robinson, Robert George**
**International Patent Department NCR Limited**
**915 High Road North Finchley**
**London N12 8QJ (GB)**

EP 0 366 758 B1

## Description

The present invention relates to a printing apparatus and more particularly, but not exclusively, to a dot matrix printing apparatus including a carriage having mounted thereon a coupling device cooperating with a toothed belt means for moving the carriage in a reciprocating manner.

The printhead and carriage of a dot matrix printing apparatus may be moved on rails by any of several arrangements, such as a cable and pulley combination, a head screw, a cam drive or an endless toothed drive belt. In this manner, a line of printed characters is completed upon travel of the printhead in one direction across record media.

In the arrangement which utilizes an endless toothed drive belt, it is desirable to provide a design of coupling device whereby the endless belt can be readily connected to the carriage, and subsequently readily disconnected from the carriage, in a manner which is reliable and which does not require cutting of the belt. A prior art arrangement of this type has been proposed in an IBM Technical Disclosure Bulletin entitled "Improved Method of Belt Attachment in a Belt Escapement System" Vol. 28, No. 9, February 1986, pp. 4021-22. This prior art arrangement describes a manner in which a toothed timing belt can be attached to a carrier by interlacing the belt between a curved rack and two side tabs. The timing belt can be laterally installed between the rack and tabs, and then tension applied to the timing belt.

One of the drawbacks of the prior art arrangement is that co-operative engagement between the timing belt and the rack is achieved solely by maintaining a sufficient tension in the timing belt. If during a period of operation the timing belt suddenly becomes untensioned, or gradually loses its tension, the timing belt may disengage from the rack and move away from the carrier. Such an occurrence may result in the timing belt wrapping itself around, or becoming snagged in, nearby components of the printing apparatus possibly causing damage thereto and to the belt itself. Furthermore, the disentangling of the belt after such an occurrence increases the period during which the printing apparatus is inoperative.

It is one object of the present invention to alleviate the problems associated with the prior art arrangement.

Accordingly the present invention provides a printing apparatus including a carriage having mounted thereon a coupling device co-operating with a toothed belt means for moving said carriage in a reciprocating manner, drive means for driving said toothed belt means, said coupling device including an arcuate member having a surface complementary to the teeth on said toothed belt means for engagement therewith and a pair of guide members extending from said carriage, said guide members being spaced from one another and being disposed adjacent to and spaced from said surface to define therebetween a guide path for said toothed belt means, characterized in that each of said guide members has a respective ledge which extends in a direction under said guide path and serves to retain said belt means therein when engaged by said drive means for operation thereby, and in that each ledge is spaced from said arcuate member to define a gap therebetween to enable said belt means to be manoeuvred between said arcuate member and each ledge for disassembly from said coupling device when said belt means is not engaged by said drive means.

The provision of said ledges provides a means of restraining said toothed belt means against downward movement away from said guide path. Thus the toothed belt means is supported by said projections when in its untensioned state prior to assembly around, or after disassembly from, said drive means. Furthermore, if during operation said toothed belt means should suddenly become untensioned, or gradually lose tension to become only partially tensioned, then said ledges restrain it from moving out of said guide path and thereby avoid the danger of said toothed belt means becoming entangled around parts of the printing apparatus.

An embodiment of the present invention will now be described by way of example, with reference to the accompanying drawings, in which:-

Fig. 1 is an elevation view, partially in section, showing the printhead carriage, the timing belt, and the structure for coupling the two in accordance with one embodiment of the present invention.

Fig. 2 is a sectional view, in a reduced scale, taken along line 2-2 of Fig. 1.

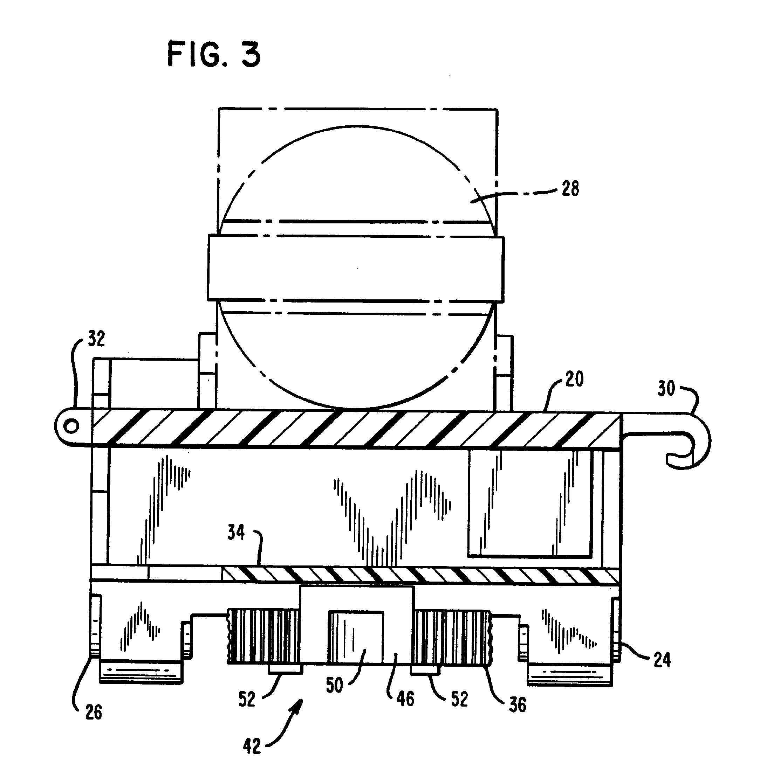

Fig. 3 is a sectional view taken along line 3-3 of Fig. 1.

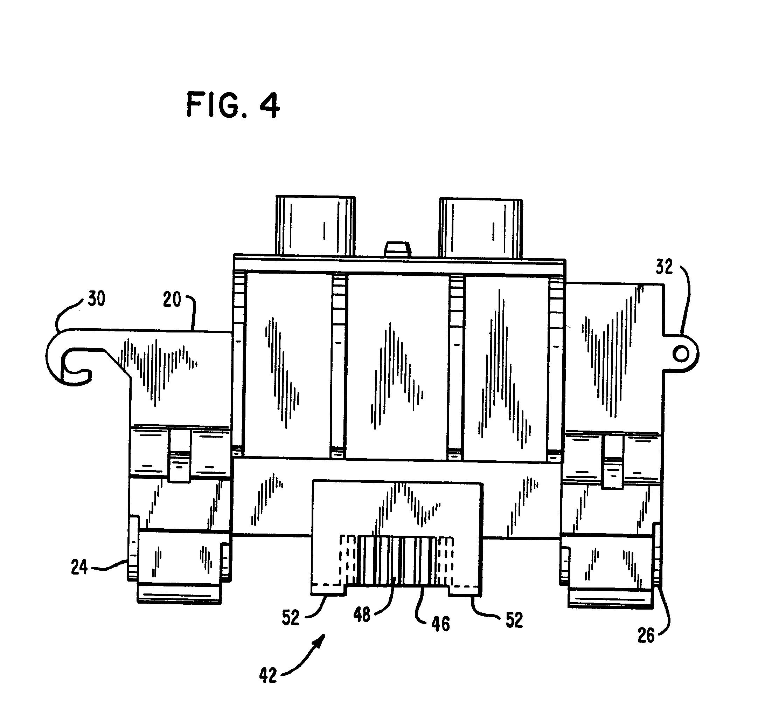

Fig. 4 is a sectional view, taken along line 4-4 of Fig. 1.

Fig. 5 is a bottom view of the printhead carriage, taken along line 5-5 of Fig. 1, showing the timing belt operatively coupled to the carriage for driving it.

Fig. 6 is a bottom view of the printhead carriage, similar to Fig. 5, showing the timing belt removed from the coupling structure of the carriage.

Referring now to the drawings, a printhead carriage 20 is mounted for sliding movement, in a direction parallel to the line of printing of indicia on record media, on a rail 22. A pair of bearings 24, 26 placed in apertures in the carriage 20 provide the engagement with the rail 22. A printhead 28 is mounted on the carriage 20 and contains one or more solenoid-operated print wires or other suitable printing devices for accomplishing the desired printing on the record media. The printhead 28 is shown only in phantom lines, and will not be further described. The carriage 20 also supports a heat sink (not shown) which partially surrounds the printhead 28 and provides a means for dissipating the heat generated by said printhead during operation. Latching elements 30 and 32 are provided on the carriage 20 for retaining the heat sink in position. The carriage 20 also carries a printed circuit board 34 which contains circuitry utilized in operation of the printhead 28 and which is electrically coupled to a computer or other device which controls character selection and other signals used in printer control.

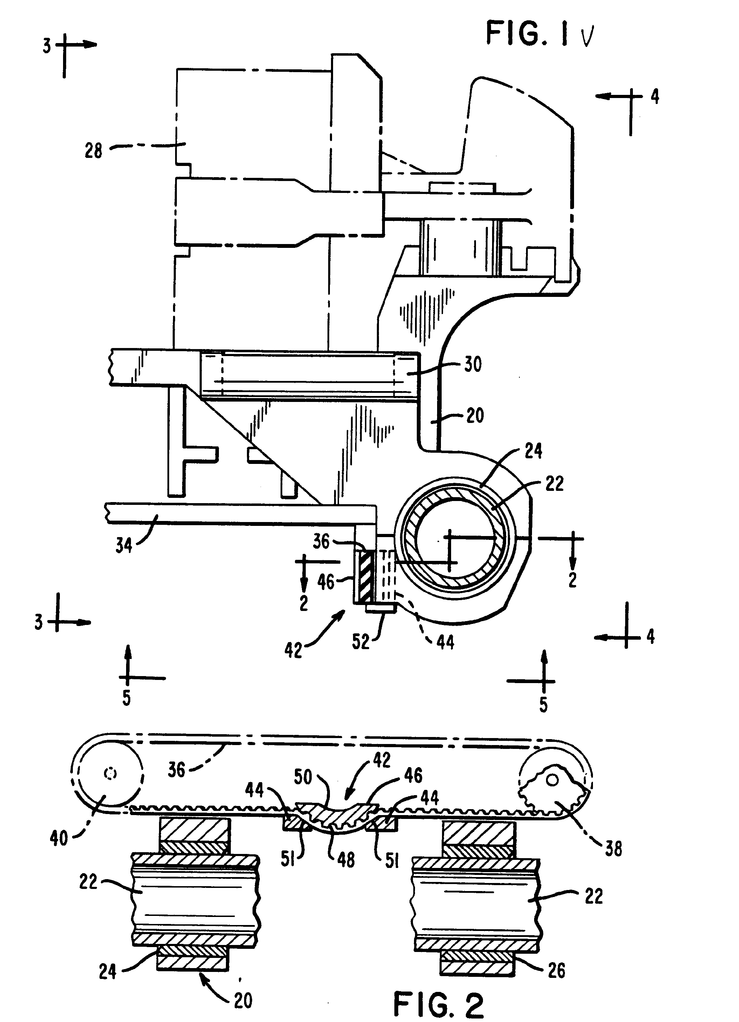

As shown in Fig. 2, the carriage 20 is driven for reciprocating transverse movement on the rail 22 by a toothed timing belt 36 which in turn is driven by a toothed gear 38, driven by a motor (not shown). The belt 36 is preferably of the endless type, and its path of movement is also defined by an idler 40, with which it engages at a distance from the gear 38, said idler gear 40 being positioned so that the major paths of movement of the belt 36 are parallel to the rail 22.

The device for coupling the belt 36 to the carriage 20 is designated generally by the reference character 42 and includes a pair of posts 44 and a central arcuate member 46. The posts 44 and the member 46 are attached to a lower surface of the carriage 20 and may be molded integrally therewith. The member 46, which may also be termed a curved toothed profile, resembles a portion of an annulus in configuration. It includes a convex surface 48 which is provided with a toothed profile that is complementary to the toothed profile of the timing belt 36, and also includes a concave surface 50 on the side of the member which faces away from the belt 36.

As may best be seen in Fig. 2, the posts 44 are of generally rectangular cross-section, with each having one corner of the rectangle being cut away to provide an angled surface 51 which is generally parallel to a portion of the convex surface 48 of member 46 to define a passageway between each post 44 and the member 46, through which the belt 36 may extend. The passageway is of slightly greater width than the width of the belt. At their bottoms, the posts 44 are provided with integral enlarged pads or ledges 52. These ledges 52 have corners 54 which extend under the passageway defined by the posts 44 and the member 46. The ledges 52 perform a retaining function to hold the belt 36 against slipping out of the coupling device 42 when the belt is loose.

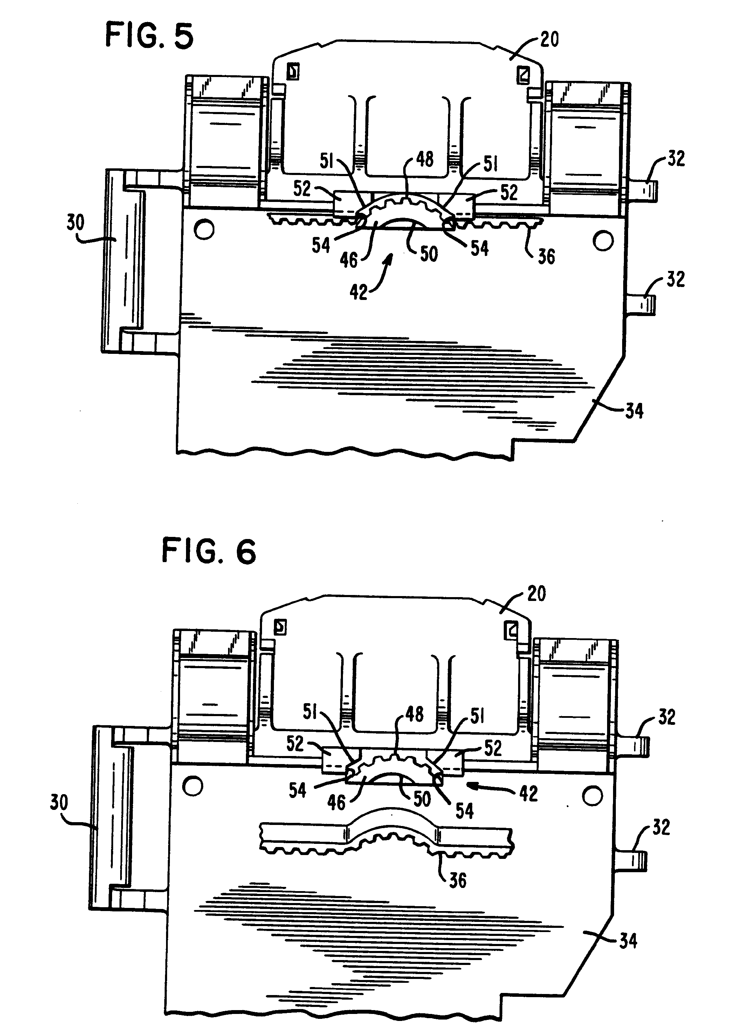

The manner in which the belt 36 and the coupling device 42 are assembled can best be seen in Figs. 5 and 6. In Fig. 6, the loose belt 36, not engaged with the gears 38 and 40, is shown as being below and separated from the coupling device 42. The teeth of the belt 36 are then aligned with the complementary recesses in the convex surface 48 of the arcuate member 46. The belt 36 is then moved upwardly, past the protruding corners 54 of the ledges 52, and into the passageways between the convex surface 48 and the surfaces 51 on the posts 44, until it is completely past and above the ledges 52. Though loose, the belt is held against falling out of the coupling device 42 by the ledges 52. When the belt is tensioned by being placed around the gears 38 and 40, it will be in the position shown in Fig. 5, and will be held in that position by its tension. Driving of the carriage 20 can then be accomplished by operating the motor (not shown) to which the gear 38 is coupled. Rotation of the gear 38 is converted by the belt 36 into linear movement of the carriage 20 for driving it in first one and then the opposite direction.

When disassembly of the belt 36 from the coupling device 42 is desired, as for example, for replacement of a worn belt, the belt is disengaged from the gears 38 and 40 and, being loose, can then be manoeuvred past the ledges 52 and their corners 54, and out of the passageways formed by the convex surface 48 of the arcuate member 46 and the angled surfaces 51 of the posts 44.

It will thus be seen that the present invention provides a simple and effective means for coupling an endless belt to the carriage of a printer which does not require separate clamps or fasteners, and in which the coupling and uncoupling can be quickly and efficiently performed.

## Claims

1. A printing apparatus including a carriage (20) having mounted thereon a coupling device (42) co-operating with a toothed belt means (36) for moving said carriage (20) in a reciprocating manner, drive means (38) for driving said toothed belt means (36), said coupling device (42) including an arcuate member (46) having a surface (48) complementary to the teeth on said toothed belt means (36) for engagement therewith and a pair of guide members (44) extending from said carriage (20), said guide members (44) being spaced from one another and being disposed adjacent to and spaced from said surface (48) to define therebetween a guide path for said toothed belt means (36), characterized in that each of said guide members (44) has a respective ledge (52) which extends in a direction under said guide path and serves to retain said belt means (36) therein when engaged by said drive means (38) for operation thereby, and in that each ledge (52) is spaced from said arcuate member (46) to define a gap therebetween to enable said belt means (36) to be manoeuvred between said arcuate member (46) and each ledge (52) for disassembly from said coupling device (42) when said belt means (36) is not engaged by said drive means (38).

2. A printing apparatus according to claim 1, characterized in that said toothed belt means (36) is an endless toothed belt (36).

3. A printing apparatus according to claim 1 or claim 2, characterized in that said toothed belt means (36) is in co-operative engagement with a motor driven gear (38) having teeth which engage with said toothed belt means (36).

4. A printing apparatus according to any one of claims 1 to 3, characterized in that the spacing between said arcuate member (46) and each of said guide members (44) is slightly larger than the thickness of said toothed belt means (36) to enable said toothed belt means (36) to be placed therebetween.

5. A printing apparatus according to any one of claims 1 to 4, characterized in that said arcuate member (46) is configured in the form of a portion of an annulus.

6. A printing apparatus according to any one of claims 1 to 5, characterized in that said guide members (44) and said arcuate member (46) are secured to a lower surface of said carriage (20).

7. A printing apparatus according to any one of claims 1 to 6, characterized in that said guide members (44) and said arcuate member (46) are molded integrally with said carriage (20).

8. A printing apparatus according to any one of claims 1 to 7, characterized in that said arcuate member (46) presents a convex surface (48) to said guide members (44).

9. A printing apparatus according to any one of claims 1 to 8, characterized in that said ledges (52) are located below the bottom surface of said arcuate member (46).

10. A printing apparatus according to any one of claims 1 to 9, characterized in that said guide members (44) and said ledges (52) each include a surface (51) complementary to said surface (48) of said arcuate member (46) to define said guide path therebetween for entry and removal of said toothed belt means (36).

11. A printing apparatus according to any one of claims 1 to 10, characterized in that said arcuate member (46) comprises a molded tooth profile conforming to the tooth profile of said toothed belt means (36).

12. A printing apparatus according to any one of claims 1 to 11, characterized in that said toothed belt means (36) is of such a length and said arcuate member (46) and said guide members (44) and said ledges (52) are relatively positioned whereby when said toothed belt means (36) is under tension it is held in place against said arcuate member (46) for driving said carriage (20), and when said toothed belt means (36) is not under tension, it is retained in position by said ledges (52) extending from said guide members (44) prior to manoeuvre through said gap.

## Patentansprüche

1. Eine Druckvorrichtung mit einem Wagen (20), auf dem eine Kopplungseinrichtung (42) montiert ist, die mit einer Zahnriemeneinrichtung (36) zum Hin- und Herbewegen des Wagens (20) zusammenarbeitet, und einer Antriebseinrichtung (38) zum Antreiben der Zahnriemeneinrichtung (36), wobei die Kopplungseinrichtung (42) ein bogenförmiges Element (46) mit einer Fläche (48), die komplementär zu den Zähnen auf der Zahnriemeneinrichtung (36) ist, um damit in Eingriff zu stehen, und ein Paar Führungselemente (44), die vom Wagen (20) wegragen, einschließt und wobei die Führungselemente (44) voneinander mit Abstand und benachbart der Fläche (48) mit Abstand angeordnet sind, um dazwischen eine Führungsbahn für die Zahnriemeneinrichtung (36) auszubilden, dadurch gekennzeichnet, daß jedes der Führungselemente (44) eine entsprechende vorstehende Kante (52) hat, die sich in einer Richtung unter der Führungsbahn erstreckt und dazu dient, die Riemeneinrichtung (36) darin zu halten, wenn die Riemeneinrichtung für deren Lauf mit der Antriebseinrichtung (38) in Eingriff steht, und daß jede vorspringende Kante (52) von dem bogenförmigen Element abgesetzt ist, um dazwischen einen Spalt auszubilden, so daß die Riemeneinrichtung (36) zwischen dem bogenförmigen Element (46) und jeder vorstehenden Kante (52) für den Ausbau aus der Koppeleinrichtung (42) herausbewegt werden kann, wenn die Riemeneinrichtung (36) nicht mit der Antriebseinrichtung (38) in Eingriff steht.

2. Druckvorrichtung nach Anspruch 1, dadurch gekennzeichnet, daß die Zahnriemeneinrichtung (36) ein endloser Zahnriemen (36) ist.

3. Druckvorrichtung nach Anspruch 1 oder 2, dadurch gekennzeichnet, daß die Zahnriemeneinrichtung (36) in kooperativem Eingriff mit einem motorgetriebenen Zahnrad (38) steht, das Zähne hat, die in Eingriff mit der Zahnriemeneinrichtung (36) stehen.

4. Druckvorrichtung nach einem der Ansprüche 1 bis 3, dadurch gekennzeichnet, daß der Abstand zwischen dem bogenförmigen Element (46) und jedem der Führungselemente (44) geringfügig größer als die Dicke der Zahnriemeneinrichtung (36) ist, so daß die Zahnriemeneinrichtung (36) dazwischen angeordnet werden kann.

5. Druckvorrichtung nach einem der Ansprüche 1 bis 4, dadurch gekennzeichnet, daß das bogenförmige Element (46) in Form eines Teils eines Ringes ausgebildet ist.

6. Druckvorrichtung nach einem der Ansprüche 1 bis 5, dadurch gekennzeichnet, daß die Führungselemente (44) und das bogenförmige Element (46) an der unteren Fläche des Wagens (20) befestigt sind.

7. Druckvorrichtung nach einem der Ansprüche 1 bis 6, dadurch gekennzeichnet, daß die Führungselemente (44) und das bogenförmige Element (46) einstückig mit dem Wagen (20) ausgebildet sind.

8. Druckvorrichtung nach einem der Ansprüche 1 bis 7, dadurch gekennzeichnet, daß das bogenförmige Element (46) eine konvexe Fläche (48) den Führungselementen (44) darbietet.

9. Druckvorrichtung nach einem der Ansprüche 1 bis 8, dadurch gekennzeichnet, daß die vorstehenden Kanten (52) unter der Bodenfläche des bogenförmigen Elementes (46) angeordnet sind.

10. Druckvorrichtung nach einem der Ansprüche 1 bis 9, dadurch gekennzeichnet, daß die Führungselemente (44) und die vorstehenden Kanten (42) jeweils eine Fläche (51) einschließen, die komplementär zur Fläche (48) des bogenförmigen Elementes (46) ist, um dazwischen die Führungsbahn für den Eintritt und Austritt der Zahnriemeneinrichtung (36) auszubilden.

11. Druckvorrichtung nach einem der Ansprüche 1 bis 10, dadurch gekennzeichnet, daß das bogenförmige Teil (46) ein geformtes Zahnprofil aufweist, das mit dem Zahnprofil der Zahnriemeneinrichtung (36) übereinstimmt.

12. Druckvorrichtung nach einem der Ansprüche 1 bis 11, dadurch gekennzeichnet, daß die Zahnriemeneinrichtung (36) eine solche Länge aufweist und das bogenförmige Element (46) und die Führungselemente (44) und die vorstehenden Kanten (52) gegenseitig so angeordnet sind, daß, falls die Zahnriemeneinrichtung (36) unter Zugspannung steht, sie in richtiger Lage gegen das bogenförmige Element (46) zum Antreiben des Wagens (20) gehalten wird, und, falls die Zahnriemeneinrichtung (36) nicht unter Zugspannung steht, sie vor dem Herausbewegen durch den Spalt durch die sich von den Führungselementen (44) wegerstreckenden Kanten (52) in richtiger Lage gehalten wird.

**Revendications**

1. Appareil d'impression comprenant un chariot (20) sur lequel est monté un dispositif (42) d'accouplement coopérant avec un moyen à courroie crantée (36) destiné à faire exécuter un mouvement alternatif audit chariot (20), des moyens d'entraînement (38) destinés à entraîner ledit moyen à courroie crantée (36), ledit dispositif d'accouplement (42) comprenant un élément incurvé (46) ayant une surface (48) complémentaire des dents dudit moyen à courroie crantée (36) pour s'engager avec lui, et deux éléments de guidage (44) faisant saillie dudit chariot (20), lesdits éléments de guidage (44) étant espacés l'un de l'autre et étant disposés de façon à être adjacents à ladite surface (48), mais écartés de celle-ci, pour qu'un trajet de guidage pour ledit moyen à courroie crantée (36) soit défini entre eux, caractérisé en ce que chacun desdits éléments de guidage (44) comporte un rebord respectif (52) qui s'étend dans une direction passant sous ledit trajet de guidage et qui sert à y retenir ledit moyen à courroie (36) lorsqu'il est engagé par lesdits moyens d'entraînement (38) pour qu'ils le commandent, et en ce que chaque rebord (52) est espacé dudit élément incurvé (46) afin qu'un intervalle soit défini entre eux pour permettre audit moyen à courroie (36) d'être manoeuvré entre ledit élément incurvé (46) et chaque rebord (52) pour être démonté dudit dispositif d'accouplement (42) lorsque ledit moyen à courroie (36) n'est pas engagé par lesdits moyens d'entraînement (38).

2. Appareil d'impression selon la revendication 1, caractérisé en ce que ledit moyen à courroie crantée (36) est une courroie crantée sans fin (36).

3. Appareil d'impression selon la revendication 1 ou la revendication 2, caractérisé en ce que ledit moyen à courroie crantée (36) est en engagement coopérant avec une roue dentée (38) entraînée par un moteur, ayant des dents qui engagent ledit moyen à courroie crantée (36).

4. Appareil d'impression selon l'une quelconque des revendications 1 à 3, caractérisé en ce que l'écartement entre ledit élément incurvé (46) et chacun desdits éléments de guidage (44) est légèrement plus grand que l'épaisseur dudit moyen à courroie crantée (36) pour permettre audit moyen à courroie crantée (36) d'être placé entre eux.

5. Appareil d'impression selon l'une quelconque des revendications 1 à 4, caractérisé en ce que ledit élément incurvé (46) est configuré sous la forme d'une partie d'un anneau.

6. Appareil d'impression selon l'une quelconque des revendications 1 à 5, caractérisé en ce que lesdits éléments de guidage (44) et ledit élément incurvé (46) sont fixés à une surface inférieure dudit chariot (20).

7. Appareil d'impression selon l'une quelconque des revendications 1 à 6, caractérisé en ce que lesdits éléments de guidage (44) et ledit élément incurvé (46) viennent de moulage avec ledit chariot (20).

8. Appareil d'impression selon l'une quelconque des revendications 1 à 7, caractérisé en ce que ledit élément incurvé (46) présente une surface convexe (48) auxdits éléments de guidage (44).

9. Appareil d'impression selon l'une quelconque des revendications 1 à 8, caractérisé en ce que lesdits rebords (52) sont situés au-dessous de la surface inférieure dudit élément incurvé (46).

10. Appareil d'impression selon l'une quelconque des revendications 1 à 9, caractérisé en ce que lesdits éléments de guidage (44) et lesdits rebords (52) présentent chacun une surface (51) complémentaire de ladite surface (48) dudit élément incurvé (46) pour définir entre elles ledit trajet de guidage pour l'entrée et l'enlèvement dudit moyen à courroie crantée (36).

11. Appareil d'impression selon l'une quelconque des revendications 1 à 10, caractérisé en ce que ledit élément incurvé (46) présente un profil denté moulé conforme au profil denté dudit moyen à courroie crantée (36).

12. Appareil d'impression selon l'une quelconque des revendications 1 à 11, caractérisé en ce que ledit moyen à courroie crantée (36) est d'une longueur telle et ledit élément incurvé (46) et lesdits éléments de guidage (44) et lesdits rebords (52) sont dans des positions relatives telles que, lorsque ledit moyen à courroie crantée (36) est tendu, il est maintenu en place contre ledit élément incurvé (46) pour entraîner ledit chariot (20) et, lorsque ledit moyen à courroie crantée (36) n'est pas tendu, il est retenu en position par lesdits rebords (52) faisant saillie desdits éléments de guidage (44) avant d'être manoeuvré à travers ledit intervalle.

FIG. I

3 →

← 4

28

30

20

24

22

34

36

46

2

42

52

44

2 ↓

5

5

FIG. 2

36

40

50

42

46

44

44

38

51

48

51

22

22

24

26

24

20

# FIG. 3

# FIG. 4

FIG. 5

FIG. 6